# EUROPÄISCHE PATENTSCHRIFT

(11) **EP 2 293 255 B1**
(45) Veröffentlichungstag und Bekanntmachung des Hinweises auf die Patenterteilung: **29.06.2016**
(21) Anmeldenummer: 10008119.9
(22) Anmeldetag: 04.08.2010
(51) Int. Cl.: G07C 5/08, B60W 40/08, B60W 50/08, G09B 9/042

(54) **Verfahren zur Steuerung eines Kraftfahrzeugs und Kraftfahrzeug**
Method for controlling a motor vehicle and motor vehicle
Procédé de commande d'un véhicule automobile et véhicule automobile

(30) Priorität: 02.09.2009 DE 102009039774
(43) Veröffentlichungstag der Anmeldung: 09.03.2011
(73) Patentinhaber: Audi AG, 85045 Ingolstadt (DE)
(72) Erfinder: Freyer, Jörn, 81827 München (DE); Brenneis, Oliver, 85748 Garching (DE); Hantschke, Christopher, 85080 Gaimersheim (DE); Kastl, Andreas, 85092 Kösching (DE); Schindler, Andreas, 85139 Wettstetten (DE); Stadel, Benjamin, 85051 Ingolstadt (DE); Ullmann, Stefan, 80797 München (DE)
(74) Vertreter: Thielmann, Frank

(56) Entgegenhaltungen:
- EP-A1- 1 811 481
- EP-A2- 0 984 260
- EP-A2- 2 028 058
- WO-A1-2008/033079
- WO-A1-2008/078088
- WO-A1-2008/141646
- DE-A1- 10 056 756
- DE-A1- 10 333 440
- DE-A1-102004 038 215

## Beschreibung

Die Erfindung betrifft ein Verfahren zur Steuerung eines Kraftfahrzeugs, insbesondere zum Zu- und Abschalten und/oder Einstellen von Fahrfunktionen und/oder von Leistungsmerkmalen, wobei wenigstens ein fahrerspezifischer, das Fahrkönnen des Fahrers beschreibender Evaluationswert ermittelt wird, wobei abhängig von dem Evaluationswert wenigstens ein für den Fahrer verfügbares Leistungsmerkmal und/oder wenigstens eine Fahrfunktion eines Systems des Kraftfahrzeugs aktiviert oder deaktiviert wird und/oder wenigstens ein Schwellwert für einen automatischen Fahreingriff, insbesondere durch ein Sicherheitssystem, angepasst wird, sowie ein zugehöriges Kraftfahrzeug. Derartige Verfahren sind aus WO 2008/078088 A1 und DE103 33 440 A1 bekannt.

Bekannte Kraftfahrzeuge stellen üblicherweise jedem Fahrer vom ersten Kilometer an den vollen Funktions- bzw. Leistungsumfang zur Verfügung. Nicht jeder Fahrer ist diesem Funktions- und Leistungsumfang jedoch von Anfang an gewachsen. Beispielsweise belegen aktuelle Unfallstatistiken, dass gehäuft Unfälle auftreten, bei denen Fahranfänger mit höhermotorisierten Fahrzeugen, beispielsweise solchen der Eltern, fahren und diese noch nicht vollständig beherrschen.

Nicht nur die Leistung kann jedoch für einen ungeübten Fahrer ein Problem oder ein Risiko darstellen. So sind beispielsweise ESP-Systeme (elektronisches Stabilitätsprogramm) bekannt, die deaktivierbar sind, wenn der Fahrer selbst mehr Kontrolle über sein Kraftfahrzeug haben will. Dies kann ungeübten Fahrern Probleme bereiten.

Doch nicht nur Sicherheitsaspekte sind bei den heutigen Kraftfahrzeugen zu berücksichtigen. Häufig kommt es auch vor, dass ein bestimmter Fahrertyp diverse Funktionen oder Leistungsmerkmale sogar ablehnt, da er zu einem beispielsweise sanfteren Fahrstil tendiert.

Ein weiteres Problem heutiger Kraftfahrzeuge ist es, dass von Sicherheitssystemen im Notfall vorgenommene Fahreingriffe, beispielsweise Lenkeingriffe oder Bremseingriffe, zeitlich nach den Fähigkeiten überragender Fahrer angesetzt werden, da so vermieden werden soll, dass bei fähigen Fahrern ein zu früher Fahreingriff nicht toleriert wird. Bei Personen, die beispielsweise naturgemäß eine höhere Reaktionszeit besitzen, könnte ein solcher Fahreingriff jedoch früher erfolgen.

Der Erfindung liegt daher die Aufgabe zugrunde, ein Verfahren zur Steuerung eines Kraftfahrzeugs, insbesondere von Fahrfunktionen, anzugeben, welches einen besser an den individuellen Fahrer angepassten Betrieb des Kraftfahrzeugs ermöglicht.

Zur Lösung dieser Aufgabe ist bei einem Verfahren der eingangs genannten Art erfindungsgemäß vorgesehen, dass dem Fahrer, insbesondere auf dessen Anforderung hin und/oder automatisch durch ein Fahrerassistenzsystem, Fahraufgaben gestellt werden, deren Erfüllung überwacht und bewertet wird.

Es wird somit vorgeschlagen, dem Kraftfahrzeug eine Information zu verschaffen, die eine Aussage über das Fahrkönnen des aktuellen Fahrers zur Verfügung stellt. Auf diese Weise ist es möglich, dass das Kraftfahrzeug dem Fahrer sozusagen ein "Feedback" zu seinem persönlichen Fahrkönnen gibt. Unter einem Sicherheitsaspekt betrachtet bedeutet dies, dass gegebenenfalls Fahrfunktionen und Leistungsmerkmale dem Fahrer noch nicht zur Verfügung stehen, so dass falsche Reaktionen und ungewollte Fahrzustände vermieden werden können. Dies ist jedoch auch bezüglich eines Komfortaspekts zu betrachten, beispielsweise dann, wenn ein Fahrer grundsätzlich eine sanftere und ruhigere Fahrweise bevorzugt und diverse Leistungsmerkmale und/oder Fahrfunktionen weder gezielt noch unabsichtlich nutzen möchte.

Die Anpassung von Sicherheitsaspekten auf den Fahrer wird im erfindungsgemäßen Verfahren auch durch die Anpassung von Schwellwerten für automatische Fahreingriffe vorteilhaft ausgestaltet. Insbesondere erfolgen solche automatischen Fahreingriffe durch Sicherheitssysteme, beispielsweise automatische Notbremssysteme und/oder automatische Ausweichsysteme und/oder Abstandswarnungssysteme und/oder Systeme zur Überwachung der Aufmerksamkeit des Kraftfahrers und/oder Systeme zum Überwachen der Spurhaltung. Bei besonders guten Fahrern können dann Fahreingriffe beispielsweise später erfolgen, so dass diesen länger die Möglichkeit zugestanden wird, einen Ausweichvorgang vorzunehmen oder dergleichen.

Da der Evaluationswert fahrerspezifisch ist, kann ein Kraftfahrzeug von mehreren Personen genutzt werden und dabei abgestimmt auf das Fahrkönnen der entsprechenden Person betrieben werden. Dies ist besonders interessant für beispielsweise Eltern, die ihr hochmotoriges Kraftfahrzeug ihrem Nachwuchs zur Verfügung stellen wollen, der gegebenenfalls gerade erst den Führerschein erhalten hat. Interessant ist eine derartige Funktionalität auch für das in Deutschland diskutierte Konzept des "Fahren mit 17", wobei es auch hier dann möglich ist, diverse Leistungsmerkmale, Fahrfunktionen und auch Schwellwerte für einen automatischen Fahreingriff so anzupassen, dass eine höhere Sicherheit erreicht wird. Insbesondere ist es, worauf im Folgenden noch näher eingegangen werden wird, denkbar, einen Fahrer schrittweise an das komplette Leistungsspektrum eines Kraftfahrzeugs heranzuführen. Dies gilt auch für das Beispiel der Fahranfänger, die hochmotorisierte Fahrzeuge fahren können und mit dem Zeitverlauf schrittweise Zugriff auf Leistungsmerkmale und Fahrfunktionen erhalten können, die ein höheres Fahrkönnen erfordern.

Es kann vorgesehen sein, dass bestimmten Werten und/oder Wertebereichen für den Evaluationswert bestimmte Konfigurationen von Leistungsmerkmalen und/oder Fahrfunktionen und/oder Schwellwerten zugeordnet werden. Beispielsweise können mithin Abstufungen vorgenommen werden, beispielsweise eine Gesamteinstufung "Fahranfänger", eine Gesamteinstufung "Fortgeschrittener Fahrer" und dergleichen. Dies entspricht gewissen Werten und/oder Wertebereichen für den Evaluationswert und es sind jeweils bestimmte Einstellungen des Kraftfahrzeugs zugeordnet. So können für den Fahranfänger einige Fahrfunktionen und Leistungsmerkmale weniger aktiviert sein, aber niedrige Schwellwerte für einen automatischen Fahreingriff vorgesehen sein, während ein geübter Fahrer einen Zugriff auf das komplette Leistungsspektrum erhalten kann. Beliebige Möglichkeiten sind hier denkbar.

Es sei an dieser Stelle noch darauf hingewiesen, dass das erfindungsgemäße Verfahren selbstverständlich - wenn dies nicht explizit anderweitig angemerkt wird - automatisch im Kraftfahrzeug abläuft, was selbstverständlich auch für die im Folgenden diskutierten Ausgestaltungen gilt. Die Ansteuerung der entsprechenden Systeme des Kraftfahrzeugs kann beispielsweise über eine Steuereinrichtung erfolgen, die entsprechend zur Ansteuerung der betroffenen Systeme ausgebildet ist.

Im erfindungsgemäßen Verfahren ist vorgesehen, dass dem Fahrer, insbesondere auf dessen Anforderung hin und/oder automatisch durch ein Fahrerassistenzsystem, Fahraufgaben gestellt werden, deren Erfüllung überwacht und bewertet wird. Dabei kann beispielsweise die Erfüllung dieser Fahraufgaben mit Punkten für den Evaluationswert belohnt werden. Als Fahraufgabe können hierbei das Erreichen eines minimalen Kraftstoffverbrauchs und/oder ein besonders sanftes Fahren und/oder eine geschickte Routenplanung und/oder das Einhalten einer Richtgeschwindigkeit und/oder das möglichst exakte Halten einer Spur und/oder eines Abstands zum Vordermann gestellt werden. Es sind jedoch auch beliebige andere Fahraufgaben denkbar, die insbesondere das Fahrkönnen des Fahrers schulen. Auf diese Weise wird der Fahrer sozusagen "spielerisch" zu einem besseren Fahrkönnen hingeführt, indem ihm derlei Aufgaben gestellt werden. So kann ein besonders ökologisches Fahren mit minimalem Kraftstoffverbrauch gefordert werden. Denkbar ist auch ein besonders sanftes Fahren (sogenannter "Chauffeursmodus"). Bezüglich einer Routenplanung können verschiedenste Aufgabenstellungen, beispielsweise abhängig von einer im Navigationssystem vorgesehenen Route, gestellt werden, beispielsweise die Route mit besonderem Fahrkomfort abzufahren oder dergleichen. Auch das Einhalten einer Richtgeschwindigkeit, beispielsweise auf einer Autobahn oder das möglichst exakte Halten eines Abstands zum Vordermann sind Aufgaben, die den Fahrer nach Art eines "Spiels" sicher an verbessertes Fahrkönnen heranführen können. Eine Aufgabe zum exakten Halten einer Spur kann beispielsweise dadurch realisiert werden, dass über ein Head-Up-Display eine ermittelte Mittellinie der aktuell befahrenen Spur eingeblendet wird, die der Fahrer dann möglichst exakt halten soll. Eine andere Möglichkeit hier wäre, dass dem Fahrer ein Sollkurs über automatisch erzeugte Lenkmomente vorgegeben wird. Derartige Ausgabemittel zur Information eines Fahrers sind aus anderen Bereichen bekannt, beispielsweise aus Spurhalteassistenzsystemen, in denen der Fahrer darauf hingewiesen werden soll, in eine bestimmte Richtung zu lenken. Dies kann beispielsweise durch ein kurzes, die Bewegungsrichtung des Kraftfahrzeugs nicht wesentlich beeinflussendes automatisches Lenkmoment in die entsprechende Richtung geschehen. Ersichtlich sind verschiedenste Möglichkeiten denkbar. Es sei angemerkt, dass der Fahrer auch Belohnungen für das Abschließen solcher Aufgaben erhalten kann, die über eine Berücksichtigung im Evaluationswert hinausgehen können, beispielsweise die unten bezüglich der externen Auswertung genannten Belohnungen oder spezielle Fahrmodi, wie das unten noch aufgezeigte "Boosten" des Motors.

Es kann vorgesehen sein, dass der Fahrer vor Beginn einer Fahrt identifiziert wird, insbesondere durch Eingabe einer Authentifizierungsinformation. Hierbei sind verschiedene Varianten denkbar, über die sich der Fahrer selbst identifiziert oder vom Kraftfahrzeug selbsttätig identifiziert werden kann. Beispielsweise kann vorgesehen sein, dass der Fahrer einen persönlichen Identifizierungscode, beispielsweise eine Zahlenkombination, an einem Bordcomputer eingibt. Vorteilhaft ist auch denkbar, dass der Fahrer über einen personifizierten Schlüssel erkannt werden kann. Auch ein Fingerabdrucksensor oder eine Identifikation über eine Chipkarte oder ein sonstiges Medium liegen im Rahmen der vorliegenden Erfindung, zusätzlich oder alternativ kann eine Innenraumkamera mit einer entsprechenden Bildverarbeitung verwendet werden, um einen Fahrer zu identifizieren. Zweckmäßigerweise kann die Identifikation des Fahrers mit einem allgemeinen Profil des Fahrers verknüpft sein, in dem beispielsweise seine bevorzugten Einstellungen bezüglich des Sitzes, der Bedieneinrichtungen, des Lenkrads, der Anzeigen und dergleichen enthalten sind, die ebenso wie der Evaluationswert genutzt werden können. Eine derartige Einstellung auf den aktuellen Fahrer wird häufig auch als "Memo-Funktion" bezeichnet.

Im Wesentlichen gibt es im Rahmen des erfindungsgemäßen Verfahrens zwei Optionen, wie der Evaluationswert ermittelt werden kann. Bevorzugt wird dieser durch das Kraftfahrzeug selber ermittelt, es ist jedoch genauso denkbar, dass der fahrerspezifische Evaluationswert von einem Benutzer eingegeben wird, insbesondere durch die Auswahl einer einem bestimmte Fahrkönnen entsprechenden Konfiguration. Denkbar ist es in der zweiten Variante beispielsweise, dass der Inhaber eines Kraftfahrzeugs für einen ungeübteren Fahrer, beispielsweise einen Fahranfänger, zunächst ein niedrigeres Fahrkönnen anwählt, um gewisse Leistungsmerkmale oder Fahrfunktionen auszuschließen, die ein Sicherheitsrisiko darstellen könnten. Interessant ist diese Funktion auch für Mietwägen, wo beispielsweise auch eine Einstellung in Abhängigkeit der abgeschlossenen Versicherung denkbar ist. In solchen Fällen kann zweckmäßigerweise vorgesehen sein, dass sich ein zur Eingabe eines Evaluationswertes berechtigter Benutzer, insbesondere eine dritte Person und/oder der Eigentümer des Kraftfahrzeugs, vor der Eingabe oder Veränderung der Evaluationswerte authentifiziert und/oder der durch das Kraftfahrzeug selber authentifiziert wird. Dabei können ähnliche oder die gleichen Maßnahmen wie die zur Identifikation des Fahrers beschriebenen durchgeführt werden, beispielsweise ist die Eingabe eines Codes, ein personalisierter Schlüssel oder eine Erkennung des Benutzers über das Kraftfahrzeug, beispielsweise über einen Fingerabdrucksensor oder eine Kamera, denkbar. Auf diese Weise wird verhindert, dass ein Fahrer, dessen Einstellungen durch diesen selbst nicht manipuliert werden sollen, von der Veränderung bzw. Eingabe seines Evaluationswertes ausgeschlossen wird.

Mit besonderem Vorteil kann jedoch vorgesehen sein, dass das Kraftfahrzeug selber eine Ermittlung des Evaluationswertes vornimmt, wobei der Evaluationswert durch kontinuierliche Überwachung der Fahrtätigkeit ermittelt wird. Das Kraftfahrzeug selbst beurteilt also anhand der Fahrtätigkeit des Fahrers in verschiedenen Fahrsituationen, wie es um das Fahrkönnen des Fahrers bestellt ist und gibt diesem somit sozusagen ein "Feedback" über seine eigenen Leistungen. Es werden folglich zur kontinuierlichen Überwachung der Fahrtätigkeit das Fahrverhalten des Fahrers beschreibende Messdaten aufgenommen und bewertet, beispielsweise durch Vergleich mit Referenzwerten und/oder erlaubten Intervallen. Diese Bewertung gibt einen Hinweis darauf, wie sich der Fahrer in der aktuellen, untersuchten Fahrsituation verhalten hat und somit auf sein Fahrkönnen. Bewertungen mehrerer solcher Situationen, die beispielsweise über einen Situationswert, insbesondere eine erreichte Punktzahl, abgebildet werden können, gehen dann in die Aktualisierung des Evaluationswertes ein, der beispielsweise mit einem festen Wert beginnen kann - einer Anfangseinschätzung oder 0 - und auf den Punkte aufaddiert, gegebenenfalls, beispielsweise bei Fahrfehlern, auch subtrahiert werden können. In diesem Fall wird also als Evaluationswert ein Punktewert verwendet, wobei Punkte für bestimmte Fahrsituationen auf den Evaluationswert addiert und/oder von dem Evaluationswert abgezogen werden. Zweckmäßigerweise wird der auf alle Fahrten eines Fahrers mit dem Kraftfahrzeug bezogene Evaluationswert gespeichert, das bedeutet, er wird über mehrere Fahrten hinweg fortgeführt.

Dies ist in mehrerlei Hinsicht vorteilhaft. Dadurch, dass das Auto das Fahrkönnen des Fahrers selbst beobachtet, kann beispielsweise eine Nachverfolgung und/oder Bewertung bei Fahranfängern ermöglicht werden. Denkbar ist beispielsweise, dass im Fall des "Fahren mit 17" durch das Kraftfahrzeug selber eine Überwachung stattfinden kann. Die Einschätzung des Fahrkönnens durch das Kraftfahrzeug ist eine objektive, auf Messdaten beruhende Beurteilung des Fahrkönnens, die nicht nur unter einem Sicherheitsaspekt als besonders vorteilhaft zu bewerten ist. Denn denkbar ist auch, dass ein Fahrer selbst einen gewissen Reiz daran sieht, sich mit der Zeit zusätzliche Fahrfunktionen und Leistungsmerkmale sozusagen zu "erfahren". Schließlich ist es denkbar, auch gewisse feste Eigenschaften des Fahrers zu bestimmen und als einen gegebenenfalls weiteren Evaluationswert zu behandeln, beispielsweise die Reaktionszeit des Fahrers, welche ab einer bestimmten unteren Schwelle für jeden Fahrer nicht mehr verbesserbar ist, wobei jedoch Unterschiede auftreten. Die Reaktionsgeschwindigkeit des Fahrers, welche anhand verschiedener Fahrsituationen, insbesondere statistisch, ermittelt werden kann, kann einen deutlichen Hinweis insbesondere bei der Einstellung von Schwellwerten für Fahreingriffe bieten.

Allgemein ist in diesem Zusammenhang anzumerken, dass bei der Verwendung mehrerer Evaluationswerte diese auch, beispielsweise bezogen auf eine bestimmte Fahrfunktion und/oder ein bestimmtes Leistungsmerkmal und/oder einen Schwellwert für einen automatischen Fahreingriff zu wenigstens einem weiteren Evaluationswert ausgewertet werden können. So ist es beispielsweise denkbar, situationsbezogene Evaluationswerte (Situationswerte) mitzuführen, die jeweils einer Situation aus einem Situationskatalog, der die das Kraftfahrzeug überwachten Funktionen beschreibt, entsprechen. Es liegt dann beispielsweise eine Matrix von Evaluationswerten vor, aus der durch Auswertung wenigstens ein weiterer Evaluationswert, beispielsweise wie oben genannt bezogen auf ein bestimmtes Leistungsmerkmal oder dergleichen, hergeleitet werden kann. Aus einer solchen Menge an Evaluationswerten kann selbstverständlich dann auch ein das allgemeine Fahrkönnen des aktuellen Fahrers bestimmender Evaluationswert, also eine Art Leitevaluationswert, durch derartige auswertende Verknüpfungen bestimmt werden. Ersichtlich bietet auch die Verwendung mehrerer Evaluationswerte viele weitere, vorteilhafte Möglichkeiten.

Wie bereits erwähnt, kann als Evaluationswert auch ein Punktewert verwendet werden, so dass ein Fahrer letztlich Punkte sammeln kann, um beispielsweise bestimmte Leistungsmerkmale und/oder Fahrfunktionen freizuschalten, wobei es grundsätzlich auch denkbar ist, dass Punkte abgezogen werden. In diesem Fall ist auch eine Art zeitlichen "Verfalls" denkbar, beispielsweise indem eine feste Anzahl oder ein fester Prozentsatz von Punkten zyklisch von dem Evaluationswert subtrahiert wird. Beispielsweise kann so ein "Punktefortschritt" beobachtet werden. Möglich ist es aber auch, fahrerinitiiert oder in bestimmten Zeitabständen dem Evaluationswert auf einen Startwert zurückzusetzen.

Wie bereits erwähnt wurde, ist es möglich, dass der auf alle Fahrten eines Fahrers mit dem Kraftfahrzeug bezogene Evaluationswert gespeichert wird.

Diesbezüglich sei angemerkt, dass es auch denkbar ist, den Evaluationswert zwischen mehreren Kraftfahrzeugen zu "transportieren", indem beispielsweise ein Fahrer bei Kauf eines neuen Kraftfahrzeuges den alten Evaluationswert in das neue Kraftfahrzeug übernehmen kann, gegebenenfalls, beispielsweise wenn es sich um ein Kraftfahrzeug einer anderen Leistungsklasse handelt, modifiziert, insbesondere skaliert.

Zweckmäßigerweise erfolgt die Überwachung der Fahrtätigkeit unter Berücksichtigung von Messdaten wenigstens eines Sensors, insbesondere eines Fahrzustandssensors und/oder eines Umfeldsensors, und/oder eines Fahrerassistenzsystems, insbesondere eines Navigationssystems. Dabei können die Daten verschiedenster Sensoren und Systeme berücksichtigt werden, beispielsweise Beschleunigungssensoren, Lenkwinkelsensoren, Umfeldsensoren, wie Radarsensoren, Ultraschallsensoren, optische Sensoren, und dergleichen. Die Informationen dieser Sensoren und Fahrerassistenzsysteme werden zusammengeführt und ausgewertet, um beispielsweise eine Fahrsituation und das Fahrverhalten des Fahrers in der Fahrsituation zu identifizieren und nachfolgend, beispielsweise durch Vergleich mit Schwellwerten oder Intervallen, zu bewerten. Entsprechend wird dann der Evaluationswert ermittelt, beispielsweise um eine bestimmte Punktzahl erhöht.

Bei der Überwachung der Fahrtätigkeit kann vorgesehen sein, dass Daten einer Innenraumkamera hinsichtlich von Blickrichtungen, insbesondere Schulterblicken, insbesondere situationsbezogen ausgewertet werden und/oder eine Fahrerfahrung bei hoher Geschwindigkeit bewertet wird, insbesondere bezüglich einer Zeit bei hohen Geschwindigkeiten und/oder bezüglich von Spurwechselvorgängen und/oder eines Lenkverhaltens bei hohen Geschwindigkeiten.

Es kann also beispielsweise beobachtet werden, ob der Fahrer, beispielsweise bei einer Spurwechselabsicht oder Abbiegevorgängen, regelmäßig einen Schulterblick durchführt, was ein Zeichen für vorausschauendes Fahren ist. Auch Fahrerfahrungen bei hoher Geschwindigkeit können für die Beurteilung des Fahrkönnens vorteilhaft berücksichtigt werden. Beispielsweise kann beobachtet werden, wie häufig ein Fahrer bei hohen Geschwindigkeiten unterwegs ist, welche Zeit er also beispielsweise oberhalb einer bestimmten Grenzgeschwindigkeit verbringt. Dies kann einen Hinweis darauf liefern, ob es sich eher um einen Stadtfahrer handelt, der selten oder nie Landstraßen oder Autobahnen befährt, oder einen sehr häufig auf Autobahnen fahrenden Fahrer, was bezüglich verschiedener Leistungsmerkmale und/oder Fahrfunktionen, insbesondere bezogen auf hohe Geschwindigkeiten, relevante Information ist, so dass gegebenenfalls hierfür ein getrennter Evaluationswert vorgesehen werden kann. Aber auch Spurwechselvorgänge und das Geschwindigkeitsverhalten dabei können zu einer deutlichen Aussage bezüglich des Fahrkönnens ausgewertet werden, wobei insbesondere eine Beobachtung des Lenkverhaltens bei hohen Geschwindigkeiten deutliche Hinweise liefert. So kann beispielsweise beobachtet werden, ob der Fahrer bei hohen Geschwindigkeiten zu zu starken Lenkvorgängen ("Verreißen") neigt. Doch auch andere Fahrsituationen können in diesem Kontext betrachtet werden.

Weiterhin kann vorgesehen sein, dass bei der Überwachung der Fahrtätigkeit vorausschauende Reaktionen des Fahrers ermittelt und bewertet werden, wobei insbesondere der Abstand zum vorausfahrenden Fahrzeug, insbesondere über einen Radarsensor und/oder ein Längsführungssystem, ermittelt und eine Reaktion des Fahrers hierauf gemessen und abhängig vom Abstand ausgewertet wird. So kann beispielsweise das Abstandsverhalten des Fahrers zu einem Vordermann oder dergleichen überprüft werden, wobei die Reaktion des Fahrers allgemein durch entsprechende Sensorik abgegriffen werden kann, beispielsweise Lenkwinkelsensoren, Pedalsensoren oder dergleichen.

Ebenso kann bei der Überwachung der Fahrtätigkeit ein für die aktuell befahrene Straße geltendes Tempolimit ermittelt werden, beispielsweise durch eine Verkehrszeichenerkennung und/oder aus Daten eines Navigationssystems, wobei die Einhaltung dieses Tempolimits überwacht und bewertet wird. Es wird demnach nachverfolgt, ob der Fahrer aufmerksam Geschwindigkeitsbeschränkungen oder dergleichen wahrnimmt oder allgemein, wie genau der Fahrer diese Geschwindigkeitsregelung einhält. Auch Daten eines Navigationssystems können hier genutzt werden, um Geschwindigkeitslimitierungen zu ermitteln, denkbar ist es jedoch auch, eine Verkehrszeichenerkennung, beispielsweise über Daten einer das Umfeld des Kraftfahrzeugs aufnehmenden Kamera, zu nutzen. Je nachdem, wie genau sich der Fahrer an die Geschwindigkeitsbegrenzungen hält, kann beispielsweise eine Punktezahl vergeben werden.

Weiterhin kann bei der Überwachung der Fahrtätigkeit das Fahrverhalten des Fahrers auf Fairness überprüft werden, insbesondere bezüglich Einfädelvorgängen, Spurwechseln, Gebrauch der Lichthupe und des Linksblinkers, Beachtung von Zebrastreifen und Vorfahrt. Es kann z. B. überprüft werden, inwieweit ein Fahrer einem anderen Verkehrsteilnehmer das Einfädeln bzw. das Spurwechseln gezielt ermöglicht und ihm Raum verschafft, beispielsweise durch Nutzung der Bremsen. Ein seltener Gebrauch der Lichthupe und kein Missbrauch des Linksblinkers, insbesondere auf Autobahnen, spricht ebenso für ein faires Fahrverhalten. Dies gilt auch für die Beachtung von Zebrastreifen und die Nutzung des Vorfahrtsrechts. Möglich wäre auch eine Beobachtung des Fahrverhaltens des Fahrers an Ampeln, beispielsweise, ob bei gelbem Licht eher beschleunigt oder gebremst wird. Auch hier können verschiedenste Fahrsituationen durch Zusammenführung von Messdaten verschiedenster Systeme und/oder Sensoren berücksichtigt werden.

In weiterer Ausgestaltung bei der Überwachung der Fahrtätigkeit kann ein Einparkverhalten überwacht werden, wobei insbesondere der Abstand zu Hindernissen und/oder die Zahl der Züge und/oder ein Kollisionsverhalten, insbesondere bezüglich des Bordsteins und/oder anderer Fahrzeuge, bewertet wird. Das Einparkverhalten eignet sich insbesondere, um das Fahrkönnen des Fahrers bezüglich des aktuell verwendeten Kraftfahrzeugs beurteilen zu können, da man bemerkt, wie gut der Fahrer die Abmessungen des Kraftfahrzeugs und auch das Lenkverhalten des Kraftfahrzeugs einschätzen kann. Doch auch allgemein stellt das Einparkverhalten viele Informationen zum Fahrkönnen des Fahrers zur Verfügung, so dass beispielsweise beobachtet werden kann, ob ein Einparken in einem, zwei oder drei Zügen erfolgt und dergleichen. Hier können insbesondere Daten einer Einparkhilfe berücksichtigt werden. Als weiteres Beispiel kann das Kollisionsverhalten des Fahrers überwacht werden, beispielsweise anhand ohnehin vorhandener Kollisionssensoren des Kraftfahrzeugs. Dabei können nicht nur Kollisionen oder Beinahe-Kollisionen mit anderen Kraftfahrzeugen zu berücksichtigen sein, sondern auch Kollisionen insbesondere der Räder mit dem Bordstein oder mit sonstigen Begrenzungen des entsprechenden Parkraums. Auch Derartiges stellt ein gutes Anzeichen für das Fahrkönnen des Fahrers, insbesondere seine Herrschaft über das Kraftfahrzeug, dar.

Es ist jedoch auch denkbar, dass zusätzlich externe Informationen bei Ermittlung des Evaluationswerts berücksichtigt werden, insbesondere das Absolvieren eines Fahrtrainings. Solche Informationen können beispielsweise von dem Kraftfahrzeug selbst geschlussfolgert werden, beispielsweise wenn bestimmte Parcours oder dergleichen abgefahren werden, es ist jedoch auch denkbar, dass solche zusätzlichen Informationen als externe Informationen vom Fahrer selbst oder einer Drittperson zur Verfügung gestellt werden.

Bei einer solchen fahrerseitigen Ermittlung des Evaluationswerts können auch spezielle Belohnungen für besonderes Fahrkönnen vergeben werden. Beispielsweise kann vorgesehen sein, dass als Belohnung für ein besonderes Fahrkönnen ein kurzzeitiges Überlasten des Motors erlaubt wird, insbesondere eine Überhöhung des Ladedrucks in einem Turbomotor und/oder die Erhöhung der Leistung eines Elektromotors. Bei vielen Motoren, insbesondere bei einem Turbomotor oder einem Elektromotor, ist es möglich, zumindest kurzzeitig die Nominalleistung des Motors zu überschreiten, beispielsweise für eine bestimmte Zeitspanne, beispielsweise 20 Sekunden, eine erhöhte Motorleistung zur Verfügung zu stellen. Eine entsprechende Option für den Fahrer kann beispielsweise aktiviert werden, wenn der Evaluationswert eine bestimmte Schwelle überschreitet. Etwas Derartiges kann beispielsweise bei Turbomotoren mit Chiptuning recht leicht realisiert werden.

Wird ein Kraftfahrzeug von mehreren Fahrern verwendet, so kann auch vorgesehen sein, dass die Evaluationswerte verschiedener Fahrer eines Kraftfahrzeugs verglichen und das Vergleichsergebnis ausgegeben wird. So erhalten die Fahrer eine Information darüber, wie ihr Fahrkönnen objektiv vom Kraftfahrzeug bewertet wird. Es sei darauf hingewiesen, dass es selbstverständlich auch möglich ist, den Evaluationswert auch nur eines Fahrers zu dessen Information auszugeben, insbesondere auch bewertet, beispielsweise nach einer Skala oder dergleichen.

Daneben ist es mit besonderem Vorteil denkbar, dass der Evaluationswert an eine externe Einrichtung übertragen und dort weiter ausgewertet wird, insbesondere durch Vergleich mit wenigstens einem Evaluationswert wenigstens eines anderen Fahrers insbesondere eines anderen Kraftfahrzeugs und/oder durch Auswertung mit anderen Daten an einem Heimrechner des Fahrers. Denkbar ist also beispielsweise, dass der Evaluationswert - gegebenenfalls zusammen mit anderen Informationen - als eine Art "Roadbook" an den Heimrechner eines Fahrers übertragen werden kann, beispielsweise durch Transport über ein Speichermedium, aber auch andere Kommunikationswege, beispielsweise drahtlose Kommunikation. Der Fahrer kann dann den Evaluationswert und die anderen Informationen betrachten und mit Hilfe von Auswertetools oder dergleichen für sich selbst, beispielsweise statistisch, auswerten. Der Evaluationswert kann jedoch auch, beispielsweise nach freiwilliger Zustimmung durch einen Fahrer, an einer externen, zentralen Einrichtung, beispielsweise beim Hersteller des Kraftfahrzeugs, weiter ausgewertet werden. Insbesondere im Hinblick auf die Marktforschung kann eine solche Informationsquelle durch den Hersteller besonders vorteilhaft genutzt werden. Denkbar ist jedoch auch, dass der Fahrer in Abhängigkeit des Auswertungsergebnisses auf der externen Einrichtung, insbesondere des Vergleichsergebnisses, eine weitere Belohnung erhält, insbesondere eine günstigere Kraftfahrzeugversicherung und/oder eine kostenlose Probefahrt und/oder ein Angebot für eine Prototypenerprobung und/oder eine Einladung in eine Kundenklinik ("customer clinic") und/oder eine Auszeichnung und/oder einen Werkstattrabatt und/oder eine Werksführung. Auf diese Weise können Fahrer auch unabhängig von dem Aktivieren/Deaktivieren von Leistungsmerkmalen/Fahrfunktionen und der Anpassung der Schwellwerte motiviert werden, ihr Fahrkönnen durch das Kraftfahrzeug bewerten zu lassen. Selbstverständlich sind noch eine Vielzahl anderer Belohnungen denkbar, beispielsweise Werbegeschenke, Erweiterungen des Kraftfahrzeugs oder dergleichen. Im Sinne der vorliegenden Erfindung als besonders vorteilhaft erweist es sich auch, dem Fahrer als Belohnung und weitere Motivation zur Verbesserung seines Fahrkönnens Fahrkurse und/oder Fahrübungen, beispielsweise ein Fahreraufbautraining oder dergleichen, anzubieten. Dabei kann der Fahrer seine Fahrkenntnisse weiter vertiefen.

Als Leistungsmerkmale können eine höhere Motorleistung und/oder eine höhere Maximalgeschwindigkeit und/oder ein Zylinder des Motors aktiviert und/oder deaktiviert werden. Gerade bei hochmotorisierten Fahrzeugen kann so für einen noch eher ungeübten Fahrer, beispielsweise einen Fahranfänger, eine Einschränkung des zur Verfügung stehenden Leistungsspektrums vorgenommen werden, was insbesondere auch schrittweise denkbar ist. Beispielsweise können mit zunehmender Fahrerfahrung und zunehmendem Fahrkönnen immer höhere Geschwindigkeiten und/oder Motorleistungen freigeschaltet werden.

Als Fahrfunktion können eine Deaktivierung eines Fahrwerkregelsystems, insbesondere eines ESP-Systems, und/oder eines Komfortsystems und/oder die Aktivierung eines Längsführungssystems, insbesondere eines ACC-Systems und/oder die Aktivierung eines Geschwindigkeitsregelsystems, insbesondere eines Tempomaten und/oder die Auswahl eines zusätzlichen Betriebsmodus des Kraftfahrzeugs, insbesondere eines sportlichen Modus, und/oder die Auswahl eines weiteren Programms eines Fahrwerkregelsystems, insbesondere eines ESP-Systems, aktiviert und/oder deaktiviert werden. So kann es beispielsweise erst Fahrern ab einem bestimmten, durch den Evaluationswert beschriebenen Fahrkönnen ermöglicht werden, ein Fahrwerkregelsystem abzuschalten oder bestimmte Konfigurationen zu verwenden, beispielsweise ESP-Modi, in denen erst ein späterer Eingriff des ESP-Systems erfolgt. Auch die Zuschaltbarkeit und Abschaltbarkeit anderer Fahrerassistenzsysteme, beispielsweise von Längsführungssystemen, Lenkassistenzsystemen bzw. Geschwindigkeitsregelsystemen, kann anhand des Evaluationswerts gesteuert werden. Auch sportliche Betriebsmodi, wie sie insbesondere von Kraftfahrzeugen mit Automatikgetrieben bekannt sind, können in ihrem Zugriff so reglementiert werden. Auf diese Weise entspricht der Funktionsumfang im Sinne der Sicherheit dem Fahrkönnen des Fahrers.

Neben dem Verfahren betrifft die vorliegende Erfindung auch ein Kraftfahrzeug, umfassend eine Steuereinrichtung, die zur Durchführung des erfindungsgemäßen Verfahrens ausgebildet ist. Im Üblichen wird ein solches Kraftfahrzeug verschiedene Sensoren und/oder Fahrzeugsysteme, insbesondere auch Fahrerassistenzsysteme, umfassen, deren Daten dann beispielsweise zur Ermittlung des Evaluationswertes ausgenutzt werden können. In jedem Fall ist es mit dem erfindungsgemäßen Kraftfahrzeug möglich, abhängig vom Fahrkönnen, beschrieben durch den Evaluationswert, wenigstens eine Fahrfunktion und/oder wenigstens ein Leistungsmerkmal zu aktivieren oder zu deaktivieren und/oder Einstellungen an den Schwellwerten für Fahreingriffe, insbesondere durch Sicherheitssysteme, vorzunehmen.

Sämtliche bezüglich des erfindungsgemäßen Verfahrens getätigten Ausführungen lassen sich analog auf das erfindungsgemäße Kraftfahrzeug übertragen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: ein Blockdiagramm zur Erläuterung des erfindungsgemäßen Verfahrens.

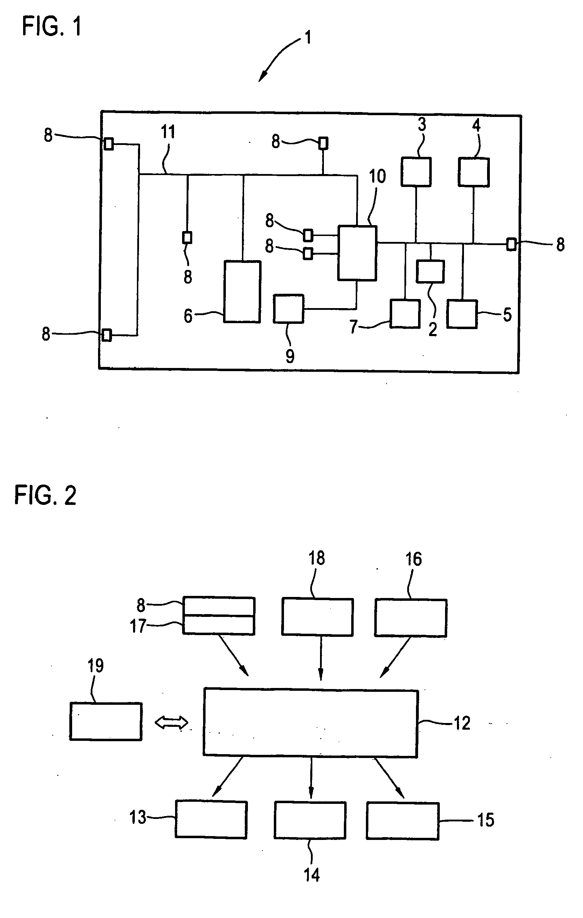

Fig. 1 zeigt ein erfindungsgemäßes Kraftfahrzeug 1. Es umfasst neben einem Motor 2 verschiedene weitere Fahrzeugsysteme, insbesondere Fahrerassistenzsysteme, wobei hier beispielhaft ein ESP-System 3, ein Navigationssystem 4, ein ACC-System 5, ein Sicherheitssystem 6 zur Einleitung einer Notbremsung sowie ein Bremsensystem 7 dargestellt sind, wobei selbstverständlich auch weitere Fahrzeugsysteme vorgesehen sein können. Den Fahrzeugsystemen zugeordnet, aber auch unabhängig, umfasst das Kraftfahrzeug 1 ferner eine Vielzahl von Sensoren 8, beispielsweise Lenkwinkelsensoren, Pedalsensoren, Innenraumsensoren wie eine Kamera oder Sitzbelegungssensoren, einen GPS-Sensor, Umfeldsensoren, insbesondere einen Radarsensor, einen Lidarsensor und/oder optische Sensoren, Beschleunigungssensoren und dergleichen. Auch Ein- und Ausgabemittel 9 sind im Fahrzeuginnenraum vorgesehen, insbesondere ein Bordcomputer, ein Multimediasystem und ein Head-Up-Display. Schließlich ist noch eine Steuereinrichtung 10 vorgesehen, die zur Durchführung des erfindungsgemäßen Verfahrens ausgebildet ist, was im Folgenden noch näher dargestellt wird. Zwischen den verschiedenen Fahrzeugsystemen bzw. deren Steuergeräten, den Sensoren 8 und auch der Steuereinrichtung 10 können Daten über ein Bussystem 11, beispielsweise einen CAN-Bus, ausgetauscht werden.

Fig. 2 ist eine Skizze, die zur Erläuterung des erfindungsgemäßen Verfahrens dient. Zentral im erfindungsgemäßen Verfahren ist der Evaluationswert 12, der von der Steuereinrichtung 10 ermittelt wird und in dessen Abhängigkeit durch die Steuereinrichtung 10 diverse Fahrzeugsysteme angesteuert werden können, beispielsweise der Motor 2, das ESP-System 3 und das Sicherheitssystem 6, und/oder diverse Fahrfunktionen 14 dieser oder anderer Systeme, insbesondere auch von Komfortsystemen, freigeschaltet werden können, beispielsweise zusätzliche Einstellungen/Betriebsmodi des ESP-Systems 3 und des ACC-Systems 5.

Konkret können diverse Leistungsmerkmale 13 aktiviert und/oder deaktiviert werden.

Beispielsweise können Schwellwerte oder Intervalle des Evaluationswerts 12 vorgesehen sein, denen dann jeweils bestimmte Konfigurationen des Kraftfahrzeugs 1 und seiner Systeme zugeordnet sind, wodurch insbesondere auch eine schrittweise Freischaltung von Leistungsmerkmalen 13/Fahrfunktionen 14 bzw. eine schrittweise Anpassung von Schwellwerten 15 für Fahreingriffe erfolgen kann.

Konkret kann beispielsweise vorgesehen sein, dass eine höhere Leistung des. Motors 2, eine höhere Maximalgeschwindigkeit und/oder ein Zylinder des Motors 2 als Leistungsmerkmale 13 aktiviert und/oder deaktiviert werden. An Fahrfunktionen 14 können gegebenenfalls diverse Betriebsmodi, insbesondere eine Aktivierung und/oder Deaktivierung, von verschiedenen Fahrerassistenzsystemen zugänglich werden, beispielsweise eine Abschaltung des ESP-Systems 3 oder auch zusätzliche Betriebsmodi dieses ESP-Systems 3, eine Zu- oder Abschaltung des ACC-Systems 5 oder dergleichen. Auch für das gesamte Kraftfahrzeug können Betriebsmodi erlaubt werden, beispielsweise ein sportlicher Betriebsmodus.

Der Evaluationswert 12 ist dabei fahrerspezifisch, er gibt das Fahrkönnen des aktuellen Fahrers wieder und kann selbstverständlich für weitere Fahrten gespeichert werden oder sogar auf ein anderes Kraftfahrzeug übertragen werden, wobei gegebenenfalls eine Anpassung erfolgen kann, beispielsweise eine Absenkung, wenn das andere Kraftfahrzeug höher motorisiert ist oder dergleichen. Der Fahrer wird also vor Beginn einer Fahrt identifiziert, wozu verschiedene Möglichkeiten denkbar sind. Neben einer fahrerseitigen Eingabe, beispielsweise einer Codenummer, können ein personalisierter Schlüssel oder auch eine personalisierte Chipkarte verwendet werden. Möglich ist es jedoch auch, dass das Kraftfahrzeug 1, beispielsweise unter Nutzung von Sensoren 8, insbesondere einer Innenraumkamera oder eines Fingerabdrucksensors, den Fahrer selbst identifiziert und somit den korrekten Evaluationswert 12 verwendet. Die Einstellung der Leistungsmerkmale 13, der Fahrfunktionen 14 und der Schwellwerte 15 für Fahreingriffe, beispielsweise für eine Notbremsung des Sicherheitssystems 6, aber auch Schwellwerte des ESP-Systems 3, erfolgt also abgestimmt auf das Fahrkönnen des aktuellen Fahrers. Ungeübten Fahrern können so beispielsweise riskantere Fahroptionen, die viel Fahrerfahrung benötigen, beispielsweise eine Deaktivierung des ESP-Systems 3 und/oder die volle Motorleistung, zunächst vorenthalten werden und dergleichen.

Grundsätzlich ist es möglich, dass der Evaluationswert 12 aus einer Eingabe 16 des Fahrers oder einer Drittperson ermittelt werden kann. Denkbar ist hier beispielsweise, dass ein Fahrzeugbesitzer, beispielsweise ein Elternteil, der einen anderen Fahrer zulassen möchte, eine dessen Fahrkönnen beschreibende Eingabe tätigt, woraus der Evaluationswert 12 bestimmt werden kann. So kann der Vater dem im Fahren noch ungeübten Sohn beispielsweise gewisse Leistungsmerkmale oder Fahrfunktionen vorenthalten oder eine sehr sichere Einstellung der Schwellwerte 15 erlauben, so dass die Fahrsicherheit erhöht wird. Denkbar ist jedoch auch eine Eingabe 16 durch den Fahrer selber, wenn dieser beispielsweise eine eher komfortable, ruhige oder sanfte Fahrt bevorzugt oder hohe Sicherheitsansprüche stellt. Sollen durch eine dritte Person als Benutzer Evaluationswerte anderer Fahrer eingegeben werden, so muss sich diese dritte Person selbst authentifizieren oder vom Kraftfahrzeug identifiziert werden, damit die betreffenden Fahrer, beispielsweise der genannte Sohn oder auch ein Mieter eines Mietwagens, selbst keinen Zugriff auf ihre Evaluationswerte haben. Dies kann wie schon bezüglich der Identifikation des aktuellen Fahrers beschrieben erfolgen.

Bevorzugt wird beim erfindungsgemäßen Verfahren jedoch der Evaluationswert 12 durch das Kraftfahrzeug 1 selbst ermittelt. Hierzu dienen Messwerte bzw. Informationen der Sensoren 8 und der verschiedenen Fahrzeugsysteme 17. Diese Daten - zusammenfassend als Messdaten bezeichnet - können nun im Rahmen einer Informationsfusion (oder auch Sensorfusion) so verarbeitet werden, dass Aussagen über das Fahrkönnen abgeleitet werden. Es findet mithin eine kontinuierliche Überwachung der Fahrtätigkeit statt. Dabei wird vorliegend als Evaluationswert 12 ein Punktewert verwendet, wobei Punkte für bestimmte Fahrsituationen auf den Evaluationswert addiert werden. Es ist jedoch auch denkbar, beispielsweise für Fahrfehler oder auch zyklisch in festen zeitlichen Abständen Punkte wieder zu subtrahieren. Der Fahrer kann so beispielsweise, wenn mehrere Schwellwerte für Leistungsmerkmale 13 und Fahrfunktionen 14 festgelegt werden, sich diese mit der Zeit durch Beweis seines Fahrkönnens sozusagen "freifahren".

Es sei an dieser Stelle angemerkt, dass es durchaus auch im Rahmen der vorliegenden Erfindung liegt, mehrere Evaluationswerte 12 zu betrachten. Als ein solcher weiterer Evaluationswert 12 bietet es sich beispielsweise an, aus dem Fahrverhalten des Fahrers die Reaktionsgeschwindigkeit zu bestimmen, welche ein wichtiges Maß für das Einstellen von Schwellwerten 15 für Fahreingriffe darstellt. Denkbar ist jedoch auch, mehrere Evaluationswerte situationsspezifisch zu führen, um dann, gegebenenfalls auch auf bestimmte Leistungsmerkmale und/oder bestimmte Fahrfunktion und/oder bestimmte Schwellwerte bezogen, durch Auswertung, insbesondere Verknüpfung, hieraus weitere Evaluationswerte abzuleiten, insbesondere auch einen das allgemeine Fahrkönnen des Fahrers beschreibenden Evaluationswert. In diesem Ausführungsbeispiel soll jedoch zunächst weiter ein punktebasierender Evaluationswert 12 diskutiert werden.

Zur Ermittlung des aktuellen Evaluationswerts 12 aufgrund der Messdaten der Sensoren 8 und Fahrzeugsysteme 17 erfolgt letztlich eine Bewertung von bestimmten Fahrsituationen, wobei eine große Vielzahl von Möglichkeiten im Rahmen des erfindungsgemäßen Verfahrens denkbar ist. Neben den Möglichkeiten, Daten einer Innenraumkamera hinsichtlich von Blickrichtungen, insbesondere von Schulterblicken, auszuwerten und beispielsweise ein Tempolimit, beispielsweise aufgrund einer Verkehrszeichenerkennung oder aus Daten des Navigationssystems 4, zu überwachen, ist es beispielsweise auch möglich, Fahrerfahrungen bei hoher Geschwindigkeit zu bewerten. Dabei kann insbesondere die Zeit aufgezeichnet werden, die der Fahrer mit höheren Geschwindigkeiten fährt, es ist jedoch auch eine situationsbezogene Auswertung denkbar, beispielsweise bei Spurwechselvorgängen oder allgemein bezüglich des Lenkverhaltens bei hohen Geschwindigkeiten, besonders bei Situationen, in denen ein Verreißen des Lenkrads droht. Auch vorausschauende Reaktionen des Fahrers können ermittelt und bewertet werden, wobei als Beispiel eine Überwachung des Abstands zum vorausfahrenden Fahrzeug stattfinden kann, wobei die Reaktionen des Fahrers abhängig vom Abstand ausgewertet werden. Auch Situationen, in denen das allgemeine Fairnessverhalten des Fahrers überprüft werden kann, beispielsweise Einfädelvorgänge, Spurwechsel, Lichthupen und Linksblinkergebrauch, Beachtung von Zebrastreifen sowie die Beachtung der Vorfahrt, können berücksichtigt und ausgewertet werden. Auch die Überwachung eines Einparkverhaltens, beispielsweise aufgrund der Daten einer Einparkhilfe, kann beobachtet werden. Dabei stellen insbesondere der Abstand zu Hindernissen und die Zahl der Züge, aber auch das Kollisionsverhalten, insbesondere bezüglich eines Bordsteins, relevante Größen dar.

Alle diese Auswertungsvorgänge können letztlich zu Punktzahlen führen, die dann auf den Evaluationswert 12 aufaddiert werden können, wobei, wie gesagt, grundsätzlich auch ein Abzug von Punkten denkbar ist, solange dies nicht zu einer Bevormundung des Fahrers führt. Durch sein Fahrverhalten in allerlei Verkehrssituationen ist es demnach denkbar, eine Aussage über das Fahrkönnen dieses Fahrers zu erhalten. Es sei an dieser Stelle noch angemerkt, dass der Fahrer hierbei nicht nur durch eine Freischaltung verschiedener Leistungsmerkmale 13 und Fahrfunktionen 14 motiviert werden kann, wie sie oben beschrieben wurden, sondern dass insbesondere dann, wenn das Kraftfahrzeug 1 den Evaluationswert 12 selbst bestimmt, auch andere Belohnungen denkbar sind, die ein Fahrer für ein besonderes sicheres, faires und stabiles Fahrverhalten erhalten kann. Beispielsweise kann vorgesehen sein, dass die Steuereinrichtung 10 eine Option zur Verfügung stellt, bei der der Motor 2 so angesteuert werden kann, dass eine kurzzeitige Überlastung möglich ist, beispielsweise eine Überhöhung des Ladedrucks, insbesondere in einem Turbomotor. Der Fahrer kann dann für eine kurze Zeitspanne als Belohnung eine höhere Leistung abrufen. Diese Funktionalität kann beispielsweise dann sehr einfach realisiert werden, wenn ein Chiptuning des Motors vorgesehen ist.

Bei der kraftfahrzeugseitigen Ermittlung des Evaluationswerts 12 können zusätzlich auch externe Informationen 18 berücksichtigt werden. Beispielsweise könnte der Fahrer an einem Fahrtraining teilgenommen haben, was ihm eine zusätzliche Punktzahl verschaffen kann.

Die Evaluationswerte 12 verschiedener Fahrer des Kraftfahrzeugs 1 können auch verglichen werden und das Vergleichsergebnis ausgegeben werden, beispielsweise an einen Bordcomputer oder dergleichen. So kann das Fahrkönnen verschiedener Fahrer verglichen werden. Eine weitere Auswertung durch den Fahrer selber ist denkbar, wenn der Evaluationswert 12 - gemeinsam mit anderen Daten, die die bisherigen Fahrten des Fahrers beschreiben - an einen Heimrechner des Fahrers übertragen werden kann, wo beispielsweise verschiedene Auswertetools oder dergleichen zur Verfügung stehen. Solche als Daten vorhandene Fahrerfahrungen können vom Fahrer dort analysiert werden.

Insbesondere kann jedoch auf freiwilliger Basis vorgesehen sein, dass der Evaluationswert, der vom Kraftfahrzeug 1 ermittelt wurde, an eine externe Einrichtung 19 übertragen werden kann, wo eine weitere Auswertung zentral erfolgt, so dass dort auch Evaluationswerte von Fahrern verschiedener Fahrzeuge untersucht werden können. Beispielsweise seitens des Herstellers ist dort nicht nur eine vorteilhafte Auswertung zur Marktforschung denkbar, der Fahrer kann auch weitere Belohnungen für besonderes Fahrkönnen erhalten. Denkbar sind beispielsweise eine günstigere Kraftfahrzeugversicherung, eine kostenlose Probefahrt, ein Angebot für einen Prototypenerprobung, eine Rekrutierung als Tester für eine Kundenklinik ("costumer clinic"), eine Auszeichnung, ein Werkstattrabatt oder auch eine Werksführung. Dies trägt zur weiteren Motivation des Fahrers bei.

Das erfindungsgemäße Verfahren sieht vor, dass dem Fahrer, insbesondere auf dessen Anforderung hin und/oder automatisch durch ein Fahrerassistenzsystem, Fahraufgaben gestellt werden, deren Erfüllung überwacht und bewertet wird. Das Bewertungsergebnis kann beispielsweise wiederum eine Punktzahl sein, die dem Evaluationswert 12 hinzugefügt oder, falls dies vorgesehen ist, auch abgezogen wird. Solche Fahraufgaben können beispielsweise das Erreichen eines minimalen Kraftstoffverbrauchs, ein besonders sanftes Fahren (sogenannter "Chauffeurs-Modus"), eine geschickte Routenplanung, das Einhalten einer Richtgeschwindigkeit oder das Einhalten eines Abstands zum Vordermann sein. So wird der Fahrer letztlich "spielerisch" motiviert, sein Fahrkönnen, seine Aufmerksamkeit und somit seine Fahrsicherheit zu erhöhen. Beispielsweise kann der Fahrer bewusst zur Nutzung des Blinkers oder des Schulterblicks motiviert werden.

Eine mögliche Ausgestaltung sei am Beispiel der Aufgabe, möglichst genau die Spurmitte zu halten, dargestellt. Dies kann beispielsweise unter Verwendung eines Spurhalteassistenzsystems geschehen. Dieses ermittelt dann eine ideale Spurmitte. Diese ideale Spurmitte kann beispielsweise über ein kontaktanaloges Head-Up-Display auf die Windschutzscheibe projiziert werden. Aufgabe des Fahrers ist es dann, möglichst exakt diese Spurmitte zu halten, was dann entsprechend bewertet wird. Alternativ oder zusätzlich sind Hinweise über Lenkmomente denkbar.

## Patentansprüche

1. Verfahren zur Steuerung eines Kraftfahrzeugs, insbesondere zum Zu- und Abschalten und/oder Einstellen von Fahrfunktionen und/oder von Leistungsmerkmalen, wobei wenigstens ein fahrerspezifischer, das Fahrkönnen des Fahrers beschreibender Evaluationswert ermittelt wird, wobei abhängig von dem Evaluationswert wenigstens ein für den Fahrer verfügbares Leistungsmerkmal und/oder wenigstens eine Fahrfunktion eines Systems des Kraftfahrzeugs aktiviert oder deaktiviert wird und/oder wenigstens ein Schwellwert für einen automatischen Fahreingriff, insbesondere durch ein Sicherheitssystem, angepasst,
**dadurch gekennzeichnet,**
**dass** dem Fahrer, insbesondere auf dessen Anforderung hin und/oder automatisch durch ein Fahrerassistenzsystem, Fahraufgaben gestellt werden, deren Erfüllung überwacht und bewertet wird.

2. Verfahren nach Anspruch 1,
**dadurch gekennzeichnet,**
**dass** der Fahrer vor Beginn einer Fahrt identifiziert wird, insbesondere durch Eingabe einer Authentifizierungsinformation.

3. Verfahren nach Anspruch 1 oder 2,
**dadurch gekennzeichnet,**
**dass** der Evaluationswert durch kontinuierliche Überwachung der Fahrtätigkeit ermittelt wird.

4. Verfahren nach Anspruch 3,
**dadurch gekennzeichnet,**
**dass** der auf alle Fahrten eines Fahrers mit dem Kraftfahrzeug bezogene Evaluationswert gespeichert wird.

5. Verfahren nach Anspruch 3 oder 4,
**dadurch gekennzeichnet,**
**dass** als Evaluationswert ein Punktewert verwendet wird, wobei Punkte für bestimmte Fahrsituationen auf den Evaluationswert addiert und/oder von dem Evaluationswert abgezogen werden.

6. Verfahren nach einem der Ansprüche 3 bis 5,
**dadurch gekennzeichnet,**
**dass** die Überwachung der Fahrtätigkeit unter Berücksichtigung von Messdaten wenigstens eines Sensors, insbesondere eines Fahrzustandssensors und/oder eines Umfeldsensors, und/oder eines Fahrerassistenzsystems, insbesondere eines Navigationssystems, erfolgt.

7. Verfahren nach einem der Ansprüche 3 bis 6,
**dadurch gekennzeichnet,**
**dass** bei der Überwachung der Fahrtätigkeit Daten einer Innenraumkamera hinsichtlich von Blickrichtungen, insbesondere Schulterblicken, insbesondere situationsbezogen ausgewertet werden und/oder eine Fahrerfahrung bei hoher Geschwindigkeit bewertet wird, insbesondere bezüglich einer Zeit bei hohen Geschwindigkeiten und/oder bezüglich von Spurwechselvorgängen und/oder eines Lenkverhaltens bei hohen Geschwindigkeiten.

8. Verfahren nach einem der Ansprüche 3 bis 7,
**dadurch gekennzeichnet,**
**dass** bei der Überwachung der Fahrtätigkeit vorausschauende Reaktionen des Fahrers ermittelt und bewertet werden, wobei insbesondere der Abstand zum vorausfahrenden Fahrzeug, insbesondere über einen Radarsensor und/oder ein Längsführungssystem, ermittelt und eine Reaktion des Fahrers hierauf gemessen und abhängig vom Abstand ausgewertet wird.

9. Verfahren nach einem der Ansprüche 3 bis 8,
**dadurch gekennzeichnet,**
**dass** bei der Überwachung der Fahrtätigkeit ein für die aktuell befahrene Straße geltendes Tempolimit ermittelt wird, beispielsweise durch eine Verkehrszeichenerkennung und/oder aus Daten eines Navigationssystems, wobei die Einhaltung dieses Tempolimits überwacht und bewertet wird.

10. Verfahren nach einem der Ansprüche 3 bis 9,
**dadurch gekennzeichnet,**
**dass** bei der Überwachung der Fahrtätigkeit ein Einparkverhalten über wacht wird, wobei insbesondere der Abstand zu Hindernissen und/oder die Zahl der Züge und/oder ein Kollisionsverhalten, insbesondere bezüglich des Bordsteins und/oder anderer Fahrzeuge, bewertet wird.

11. Verfahren nach einem der Ansprüche 3 bis 10,
**dadurch gekennzeichnet,**
**dass** zusätzliche externe Informationen bei der Ermittlung des Evaluationswerts berücksichtigt werden, insbesondere das Absolvieren eines Fahrtrainings.

12. Verfahren nach einem der Ansprüche 3 bis 11,
**dadurch gekennzeichnet,**
**dass** als Belohnung für ein besonderes Fahrkönnen ein kurzzeitiges Überlasten des Motors erlaubt wird, insbesondere eine Überhöhung des Ladedrucks in einem Turbomotor und/oder die Erhöhung der Leistung eines Elektromotors.

13. Verfahren nach einem der Ansprüche 3 bis 12,
**dadurch gekennzeichnet,**
**dass** die Evaluationswerte verschiedener Fahrer eines Kraftfahrzeugs
verglichen und das Vergleichsergebnis ausgegeben wird.

14. Verfahren nach einem der Ansprüche 3 bis 13,
**dadurch gekennzeichnet,**
**dass** der Evaluationswert an eine externe Einrichtung übertragen und dort weiter ausgewertet wird, insbesondere durch Vergleich mit wenigstens einem Evaluationswert wenigstens eines anderen Fahrers insbesondere eines anderen Kraftfahrzeugs und/oder durch Auswertung mit anderen Daten an einem Heimrechner des Fahrers.

15. Verfahren nach einem der Ansprüche 1 oder 2,
**dadurch gekennzeichnet,**
**dass** der fahrerspezifische Evaluationswert von einem Benutzer eingegeben wird, insbesondere durch die Auswahl einer einem bestimmten Fahrkönnen entsprechenden Konfiguration.

16. Verfahren nach Anspruch 15,
**dadurch gekennzeichnet,**
**dass** sich ein zur Eingabe des Evaluationswerts berechtigter Benutzer vor der Eingabe oder Veränderung der Evaluationswerte authentifiziert und/oder er durch das Kraftfahrzeug identifiziert wird.

17. Verfahren nach einem der vorangehenden Ansprüche,
**dadurch gekennzeichnet,**
**dass** als Fahraufgabe das Erreichen eines minimalen Kraftstoffverbrauchs und/oder ein besonders sanftes Fahren und/oder eine geschickte Routenplanung und/oder das Einhalten einer Richtgeschwindigkeit und/oder das möglichst exakte Halten einer Spur oder eines Abstands zum Vordermann gestellt wird.

18. Verfahren nach einem der vorangehenden Ansprüche,
**dadurch gekennzeichnet,**
**dass** als Leistungsmerkmal eine höhere Motorleistung und/oder eine höhere Maximalgeschwindigkeit und/oder ein Zylinder des Motors aktiviert und/oder deaktiviert werden.

19. Verfahren nach einem der vorangehenden Ansprüche,
**dadurch gekennzeichnet,**
**dass** als Fahrfunktionen eine Deaktivierung eines Fahrwerkregelsystems, insbesondere eines ESP-Systems, und/oder eines Komfortsystems und/oder die Aktivierung eines Längsführungssystems, insbesondere eines ACC-Systems, und/oder die Aktivierung eines Geschwindigkeitsregelsystems, insbesondere eines Tempomaten, und/oder die Auswahl eines zusätzlichen Betriebsmodus des Kraftfahrzeugs, insbesondere eines sportlichen Modus,. und/oder die Auswahl eines weiteren Programms eines Fahrwerkregelsystems, insbesondere eines ESP-Systems, aktiviert und/oder deaktiviert werden.

20. Kraftfahrzeug (1), umfassend eine Steuereinrichtung (10), ausgebildet zur Durchführung des Verfahrens nach einem der vorangehenden Ansprüche.

## Claims

1. Method for controlling a motor vehicle, in particular, for switching on and off and/or configuring driving functions and/or performance features, wherein at least one driver-specific evaluation value describing the driving ability of the driver is determined, wherein, depending on the evaluation value, at least one performance feature available to the driver and/or at least one driving function of a system of the motor vehicle is activated or deactivated and/or at least one threshold value for an automatic driving intervention is adapted, in particular by a safety system, **characterised in that**, the driver, in particular in response to the requirement of said driver, and/or automatically through a driver assistance system, is set driving tasks, the fulfilment of which is monitored and scored.

2. Method according to claim 1, **characterised in that** driver is identified before beginning a journey, in particular, through input of authentication information.

3. Method according to claim 1 or 2, **characterised in that** the evaluation value is determined through continuous monitoring of the driving activity.

4. Method according to claim 3, **characterised in that** the evaluation value relating to every journey of a driver with the motor vehicle is stored.

5. Method according to claim 3 or 4, **characterised in that** a points value is used as the evaluation value, wherein points are added to the evaluation value and/or deducted from the evaluation value for specified driving situations.

6. Method according to one of claims 3 to 5, **characterised in that** the monitoring of the driving activity is carried out taking account of measurement data from at least one sensor, in particular a driving state sensor and/or a surroundings sensor, and/or a driver assistance system, in particular a navigation system.

7. Method according to one of claims 3 to 6, **characterised in that** during monitoring of the driving activity, data from a passenger compartment camera is analysed with respect to directions of view, in particular views over the shoulder, in particular in relation to situations, and/or a driving experience at higher speed is scored, in particular with respect to a time spent at high speeds and/or with respect to lane change procedures and/or a steering behaviour at high speeds.

8. Method according to one of claims 3 to 7, **characterised in that** during monitoring of the driving activity, anticipatory reactions of the driver are determined and scored, wherein, in particular, the distance from the vehicle driving in front is determined, in particular by a radar sensor and/or a longitudinal guidance system, and a reaction of the driver thereto is measured and analysed as a function of the distance.

9. Method according to one of claims 3 to 8, **characterised in that** during monitoring of the driving activity, a speed limit valid for the road currently being driven on is determined, for example through traffic sign recognition and/or through data from a navigation system, wherein adherence to said speed limit is monitored and scored.

10. Method according to one of claims 3 to 9, **characterised in that** during monitoring of the driving activity, parking behaviour is monitored, wherein in particular the distance to obstacles and/or the number of moves and/or a collision behaviour, in particular with respect to kerbstones and/or other vehicles, is scored.

11. Method according to one of claims 3 to 10, **characterised in that** additional external information is considered during the determination of the evaluation value, in particular the completion of a driver training course.

12. Method according to one of claims 3 to 11, **characterised in that** as reward for a special driving ability, a short overcharging of the motor is allowed, in particular boosting of the charging pressure in a turbocharged engine and/or the raising of the power of an electric motor.

13. Method according to one of claims 3 to 12, **characterised in that** the evaluation values compare different drivers of a motor vehicle and output the comparison result.

14. Method according to one of claims 3 to 13, **characterised in that** the evaluation value is transferred to an external device and further analysed in said device, in particular by comparison with at least one evaluation value of at least one other driver, in particular of another motor vehicle, and/or through analysis with other data on a home computer of the driver.

15. Method according to one of claims 1 or 2, **characterised in that** the driver specific evaluation value of a user is entered, in particular through the selection of a configuration of a specified relevant driving ability.

16. Method according to claim 15, **characterised in that** a user entitled to enter evaluation values, obtains authorisation before inputting or changing the evaluation values and/or is identified by the motor vehicle.

17. Method according to one of the preceding claims, **characterised in that** the achievement of a minimum fuel efficiency and/or a particularly smooth driving and/or a skilful route planning and/or adherence to a correct speed and/or the most accurate possible maintenance of a lane or a distance from the person in front is set as a driving task.

18. Method according to one of the preceding claims, **characterised in that** a higher engine power and/or a higher maximum speed and/or a cylinder of the motor is activated and/or deactivated as a performance feature.

19. Method according to one of the preceding claims, **characterised in that** the deactivation of a chassis adjustment system, in particular an ESP system, and/or a comfort system and/or the activation of a longitudinal guidance system, in particular an ACC system, and/or the activation of a speed regulation system, in particular a cruise control, and/or the selection of an additional operating mode of the motor vehicle, in particular a sports mode, and/or the selection of a further program of a chassis adjustment system, in particular an ESP system, are activated and/or deactivated as driving functions.

20. Motor vehicle (1), comprising a control device (10) designed to perform the method according to one of the preceding claims.

## Revendications

1. Procédé de commande d'un véhicule automobile, notamment pour la mise en service et l'arrêt et/ou le réglage de fonctions de conduite et/ou de performances, au moins une valeur d'évaluation qui est spécifique au conducteur et qui décrit les capacités de pilotage du conducteur étant déterminée, au moins une performance disponible pour le conducteur et/ou au moins une fonction de conduite d'un système du véhicule automobile étant activée ou désactivée en fonction de la valeur d'évaluation et/ou au moins une valeur de seuil pour une intervention de conduite automatique, notamment par un système de sécurité, étant adaptée,
**caractérisé en ce que** des instructions de conduite sont données au conducteur, notamment à la demande de celui-ci et/ou automatiquement par un système d'assistance au conducteur, instructions de conduite dont l'exécution est surveillée et évaluée.

2. Procédé selon la revendication 1, **caractérisé en ce que** le conducteur est identifié avant le début d'un trajet, notamment par l'entrée d'une information d'authentification.

3. Procédé selon la revendication 1 ou 2, **caractérisé en ce que** la valeur d'évaluation est déterminée par surveillance continue de l'activité de conduite.

4. Procédé selon la revendication 3, **caractérisé en ce que** la valeur d'évaluation se rapportant à tous les trajets d'un conducteur avec le véhicule automobile est mémorisée.

5. Procédé selon la revendication 3 ou 4, **caractérisé en ce qu'**une valeur en points est utilisée comme valeur d'évaluation, des points pour certaines situations de conduite étant ajoutés à la valeur d'évaluation et/ou ôtés de la valeur d'évaluation.

6. Procédé selon l'une des revendications 3 à 5, **caractérisé en ce que** la surveillance de l'activité de conduite s'effectue en tenant compte de données de mesure d'au moins un capteur, notamment d'un capteur d'état de roulage et/ou d'un capteur d'environnement, et/ou d'un système d'assistance au conducteur, notamment d'un système de navigation.

7. Procédé selon l'une des revendications 3 à 6, **caractérisé en ce que**, lors de la surveillance de l'activité de conduite, des données d'une caméra d'habitacle sont évaluées, notamment en rapport avec la situation, quant à la direction du regard et notamment les regards par-dessus l'épaule et/ou **en ce qu'**une expérience de conduite à grandes vitesses est évaluée, notamment par rapport à un temps à grandes vitesses et/ou par rapport à des opérations de changement de file et/ou d'un comportement de direction à grandes vitesses.

8. Procédé selon l'une des revendications 3 à 7, **caractérisé en ce que**, lors de la surveillance de l'activité de conduite, des réactions par anticipation du conducteur sont déterminées et évaluées, la distance au véhicule précédent étant notamment déterminée, notamment par l'intermédiaire d'un capteur radar et/ou d'un système de guidage longitudinal, et une réaction du conducteur à cette donnée étant mesurée et évaluée en fonction de la distance.

9. Procédé selon l'une des revendications 3 à 8, **caractérisé en ce que**, lors de la surveillance de l'activité de conduite, une limite de vitesse valable pour la route actuellement parcourue est déterminée, par exemple par une reconnaissance de panneaux de circulation et/ou à partir de données d'un système de navigation, le respect de cette limite de vitesse étant surveillé et évalué.

10. Procédé selon l'une des revendications 3 à 9, **caractérisé en ce que**, lors de la surveillance de l'activité de conduite, un comportement lors d'un stationnement est surveillé, la distance à des obstacles et/ou le nombre de manoeuvres et/ou un comportement lors d'une collision, notamment par rapport au trottoir et/ou à d'autres véhicules, étant notamment évalués.

11. Procédé selon l'une des revendications 3 à 10, **caractérisé en ce que** des informations externes supplémentaires sont prises en compte lors de la détermination de la valeur d'évaluation, notamment la participation à un stage de conduite.

12. Procédé selon l'une des revendications 3 à 11, **caractérisé en ce que**, en récompense de capacités de pilotage particulières, une surcharge temporaire du moteur est permise, notamment un dépassement de la pression de suralimentation dans un moteur à turbocompresseur et/ou une augmentation de la puissance d'un moteur électrique.

13. Procédé selon l'une des revendications 3 à 12, **caractérisé en ce que** les valeurs d'évaluation de différents conducteurs d'un véhicule automobile sont comparées et le résultat de comparaison est présenté.

14. Procédé selon l'une des revendications 3 à 13, **caractérisé en ce que** la valeur d'évaluation est transmise à un dispositif externe dans lequel elle est encore évaluée, notamment par comparaison à au moins une valeur d'évaluation d'au moins un autre conducteur notamment d'un autre véhicule automobile et/ou par évaluation avec d'autres données sur un ordinateur personnel du conducteur.

15. Procédé selon l'une des revendications 1 ou 2, **caractérisé en ce que** la valeur d'évaluation spécifique au conducteur est entrée par un utilisateur, notamment par la sélection d'une configuration correspondant à des capacités de pilotage particulières.

16. Procédé selon la revendication 15, **caractérisé en ce qu'**un utilisateur autorisé à entrer la valeur d'évaluation s'authentifie avant l'entrée ou la modification des valeurs d'évaluation et/ou il est identifié par le véhicule automobile.

17. Procédé selon l'une des revendications précédentes, **caractérisé en ce que**, comme instruction de conduite, on a l'obtention d'une consommation de carburant minimale et/ou une conduite particulièrement douce et/ou une planification d'itinéraire judicieuse et/ou le respect d'une vitesse correcte et/ou le respect le plus exact possible d'une voie ou d'une distance au véhicule précédent.

18. Procédé selon l'une des revendications précédentes, **caractérisé en ce que**, comme performance, on active et/ou désactive une puissance de moteur supérieure et/ou une vitesse maximale supérieure et/ou un cylindre du moteur.

19. Procédé selon l'une des revendications précédentes, **caractérisé en ce que**, comme fonctions de conduite, on a une désactivation d'un système de contrôle de châssis, notamment un système ESP, et/ou d'un système de confort et/ou l'activation d'un système de guidage longitudinal, notamment d'un système ACC, et/ou l'activation d'un système de régulation de vitesse, notamment d'un régulateur de vitesse, et/ou la sélection d'un mode de fonctionnement supplémentaire du véhicule automobile, notamment d'un mode sportif, et/ou la sélection d'un autre programme d'un système de contrôle de châssis, notamment d'un système ESP.

20. Véhicule automobile (1), comprenant un dispositif de commande (10), conçu pour la mise en oeuvre du procédé selon l'une des revendications précédentes.
